# DEMANDE DE BREVET EUROPEEN

(11) **EP 2 354 889 A1**
(43) Date de publication de la demande: **10.08.2011**
(21) Numéro de dépôt: 11153168.7
(22) Date de dépôt: 03.02.2011
(51) Int. Cl.: G06F 1/26, G06F 1/32

(54) **Procédé de régulation de la consommation d'énergie d'équipements en exploitant la notion de présence d'un serveur d'appel**

(30) Priorité: 04.02.2010 FR 1000461
(71) Demandeur: Alcatel Lucent, 75007 Paris (FR)
(72) Inventeur: Engles, Sylvain, 67400, ILLKIRCH (FR)
(74) Mandataire: Mouney, Jérôme

(57) **Abrégé**

L'invention concerne un procédé de régulation de la consommation d'énergie d'équipements (1) en exploitant la notion de présence d'un serveur (5) d'appel, lesdits équipements étant alimentés par un tableau (3) et localisés dans des zones (2) géographiques comprenant au moins un terminal (4) connecté audit serveur d'appel, ledit procédé prévoyant d'équiper lesdits terminaux avec un dispositif (7) de détection qui comprend des moyens agencés pour transmettre audit serveur d'appel une information (8) de présence d'un utilisateur dudit terminal, ledit serveur intégrant une table d'identification et de localisation des dispositifs de détection, ledit procédé prévoyant, après réception d'une information (8) de présence par le serveur d'appel, de localiser le dispositif (7) de détection associé et d'utiliser ladite information de présence pour commander le tableau (3) d'alimentation afin de réguler la consommation d'énergie des équipements (1) de la zone (2) dans laquelle ledit dispositif de détection est localisé.

## Description

L'invention concerne un procédé de régulation de la consommation d'énergie d'équipements en exploitant la notion de présence d'un serveur d'appel , lesdits équipements étant alimentés par un tableau et localisés dans des zones géographiques comprenant au moins un terminal connecté audit serveur d'appel, ainsi qu'une architecture pour la mise en oeuvre d'un tel procédé.

Pour des raisons d'économie, les entreprises peuvent être amenées à s'intéresser à la régulation de la consommation d'énergie de leurs équipements, notamment pour éviter les gaspillages dus au fonctionnement inutile d'équipements non utilisés et que leurs utilisateurs ont oublié d'éteindre.

Pour ce faire, les entreprises soucieuses de leur consommation en énergie peuvent être amenées à installer dans leurs locaux des équipements autorégulateurs, comme par exemple des dispositifs d'éclairage équipés d'un détecteur de mouvement sensible au rayonnement infrarouge et/ou d'une minuterie automatique, ou encore des équipements de chauffage programmables.

Une telle fonctionnalité n'est cependant pas disponible pour tous les types d'équipements généralement utilisés dans les entreprises, la consommation d'énergie desdits équipements étant alors régulée par leurs utilisateurs, ce qui peut engendrer un gaspillage d'énergie lorsque lesdits utilisateurs oublient d'éteindre lesdits équipements.

En outre, l'installation et la configuration des équipements autorégulateurs tels que mentionnés plus haut s'avère parfois assez complexe, ce qui peut nécessiter une maintenance coûteuse.

L'invention vise à perfectionner l'art antérieur en proposant notamment un procédé de régulation de la consommation d'énergie d'équipements alimentés par un tableau, ledit procédé étant simple à utiliser et à configurer et permettant en outre de limiter au maximum l'intervention des utilisateurs desdits équipements.

A cet effet, selon un premier aspect, l'invention propose un procédé de régulation de la consommation d'énergie d'équipements en utilisant la notion de présence d'un serveur d'appel, lesdits équipements étant alimentés par un tableau et localisés dans des zones géographiques comprenant au moins un terminal connecté audit serveur d'appel, ledit procédé prévoyant d'équiper lesdits terminaux avec un dispositif de détection qui comprend des moyens agencés pour transmettre audit serveur d'appel une information de présence d'un utilisateur dudit terminal, ledit serveur intégrant une table d'identification et de localisation des dispositifs de détection, ledit procédé prévoyant, après réception d'une information de présence par le serveur d'appel, de localiser le dispositif de détection associé et d'utiliser ladite information de présence pour commander le tableau d'alimentation afin de réguler la consommation d'énergie des équipements de la zone dans laquelle ledit dispositif de détection est localisé.

Selon un deuxième aspect, l'invention propose une architecture pour la mise en oeuvre d'un procédé de régulation de la consommation d'énergie d'équipements localisés dans des zones géographiques, ladite architecture comprenant :
- un tableau d'alimentation en énergie desdits équipements ;
- au moins un terminal dans chacune desdites zones, chacun desdits terminaux étant équipé d'un dispositif de détection qui comprend des moyens agencés pour transmettre une information de présence d'un utilisateur dudit terminal ;
- un serveur d'appel auquel sont connectés lesdits terminaux et qui comprend des moyens pour recevoir lesdites informations de présence, ledit serveur d'appel intégrant une table d'identification et de localisation des dispositifs de détection ;
- un serveur de présence comprenant des moyens pour commander un serveur de contrôle d'énergie du tableau d'alimentation afin de réguler la consommation d'énergie des équipements de la zone dans laquelle un dispositif de détection a été localisé.

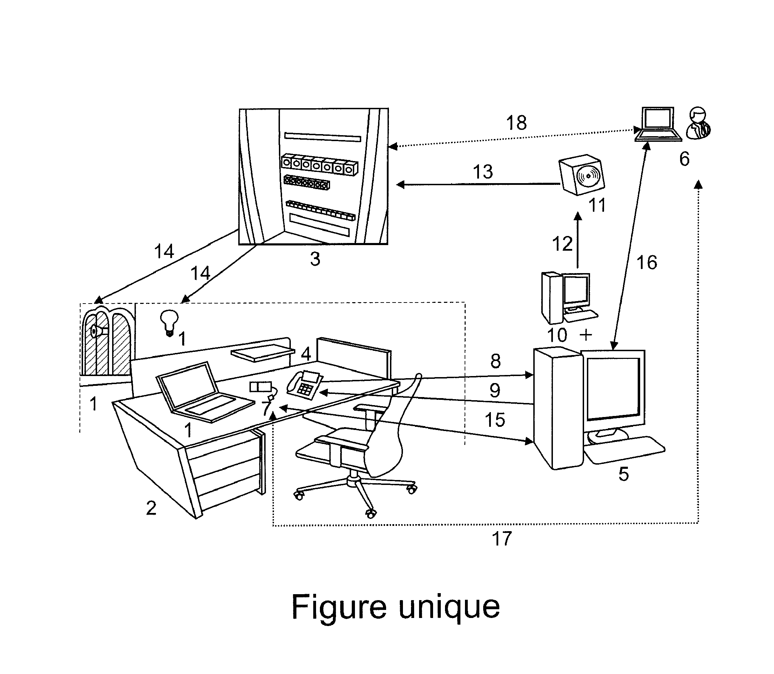

D'autres particularités et avantages de l'invention apparaîtront dans la description qui suit, faite en référence à la figure jointe représentant une architecture pour la mise en oeuvre d'un procédé de régulation selon l'invention.

En relation avec cette figure, on décrit ci-dessous une architecture pour la mise en oeuvre d'un procédé de régulation de la consommation d'énergie d'équipements 1 localisés dans une zone 2 géographique parmi d'autres non représentées, lesdites zones géographiques pouvant être en particulier des pièces d'un bâtiment, comme par exemple des bureaux d'une entreprise.

En outre, les équipements 1 considérés peuvent par exemple comprendre des lampes de plafond, des radiateurs, des volets automatiques, des ordinateurs fixes ou portables, des télécopieurs, ou encore des photocopieuses.

L'architecture comprend un tableau 3 d'alimentation en énergie des équipements 1 localisés dans des zones 2 géographiques. En particulier, et en relation avec la figure, si la zone 2 géographique considérée est un bureau d'une entreprise et si ladite entreprise comprend une installation électrique, le tableau 3 peut se présenter sous la forme d'une armoire électrique.

Le procédé de régulation prévoit que chaque zone 2 géographique comprenne au moins un terminal 4. Pour reprendre l'exemple des bureaux d'une entreprise, le terminal 4 peut être un ordinateur de bureau, ou encore, comme représenté sur la figure, un appareil de téléphonie fixe.

Le procédé de régulation prévoit en outre que chaque terminal 4 soit connecté à un serveur 5 d'appel qui est compris dans un réseau, par exemple un réseau IP (pour Internet Protocol) d'une entreprise. Pour ce faire, l'architecture comprend un tel serveur 5 d'appel auquel sont connectés les terminaux 4 présents dans chacune des zones 2 géographiques.

Ainsi, par l'intermédiaire du serveur 5 d'appel, l'architecture peut facilement être intégrée à un réseau IP existant d'une entreprise, et ce sans aucune modification de l'infrastructure dudit réseau, ce qui permet en outre de simplifier l'installation, l'utilisation et la maintenance de ladite architecture, et donc de réduire les coûts en énergie de ladite entreprise sans pour autant investir dans un système de régulation coûteux. En outre, de tels avantages combinés rendent l'architecture selon l'invention relativement accessible.

En raison de ses avantages, le procédé selon l'invention peut non seulement intéresser les entreprises soucieuses de faire des économies d'énergie, mais aussi les fournisseurs d'installations électriques souhaitant enrichir leurs offres, voire même les fournisseurs d'énergie.

En particulier, la configuration et la maintenance informatique de l'architecture selon l'invention peuvent être assurées par un administrateur 6 d'un réseau tel que décrit ci-dessus et comprenant le serveur 5 d'appel.

Le procédé de régulation prévoit en outre d'équiper chaque terminal 4 avec un dispositif 7 de détection de présence d'un utilisateur dudit terminal. En relation avec la figure, le dispositif 7 de détection peut par exemple se présenter sous la forme d'une clef USB (pour Universal Serial Bus), et être connecté à un terminal 4 au moyen de l'interface USB dudit terminal.

Le dispositif 7 de détection comprend au moins un capteur d'une information 8 de présence d'un utilisateur du terminal 4 équipé dudit dispositif. Selon une réalisation, le capteur est une sonde sensible au rayonnement infrarouge, ladite sonde permettant de détecter tout changement de présence d'un utilisateur du terminal 4 dans la zone 2 géographique comprenant ledit terminal.

Le dispositif 7 de détection comprend en outre des moyens agencés pour transmettre au serveur 5 d'appel une information 8 de présence d'un utilisateur du terminal 4, ledit serveur d'appel comprenant des moyens pour recevoir ladite information de présence.

Le procédé de régulation prévoit en outre, après réception d'une information 8 de présence d'un utilisateur d'un terminal 4, de localiser le dispositif 7 de détection associé. Pour ce faire, le serveur 5 d'appel intègre une table d'identification et de localisation dudit dispositif de détection.

La table d'identification et de localisation permet en particulier au serveur 5 d'appel de reconnaître le dispositif 7 de détection lui transmettant une information 8 de présence. Pour ce faire, un administrateur 6 du réseau peut configurer le serveur 5 d'appel de sorte à compléter la table dudit serveur d'appel avec des données utiles à l'identification et à la localisation de chaque dispositif 7 de détection, telles que le numéro de série dudit dispositif, le numéro de série du terminal 4 équipé dudit dispositif, l'adresse IP et/ou l'adresse MAC (pour Medium Access Control) dudit terminal, ou encore la zone 2 géographique dans laquelle est localisé ledit terminal.

Le serveur 5 d'appel dispose donc, grâce à sa table, de toutes les données nécessaires à l'identification et à la localisation de tout dispositif 7 de détection lui transmettant une information 8 de présence. Selon une réalisation, une fois un tel dispositif 7 de détection localisé, le procédé de régulation peut prévoir, avant de commander le tableau 3 d'alimentation, que le serveur 5 d'appel envoie au terminal 4 équipé dudit dispositif une alerte 9 de régulation de la consommation d'énergie des équipements 1 concernés.

En outre, si l'information 8 de présence envoyée par le dispositif 7 de détection concerne l'arrivée ou le départ d'un utilisateur du terminal 4 dans la zone 2 géographique, l'alerte 9 indique que l'alimentation en énergie des équipements 1 de ladite zone sera respectivement établie ou interrompue.

Le procédé de régulation prévoit d'utiliser l'information 8 de présence pour commander le tableau 3 d'alimentation afin de réguler la consommation d'énergie des équipements 1 de la zone 2 dans laquelle le dispositif 7 de détection associé à ladite information de présence a été localisé.

Pour ce faire, en relation avec la figure, l'architecture comprend un serveur 10 de présence comprenant des moyens pour commander un serveur 11 de contrôle d'énergie du tableau 3 d'alimentation. En particulier, selon une réalisation, le serveur 10 de présence est intégré dans le serveur 5 d'appel.

Le serveur 10 de présence comprend des moyens, par exemple une table telle que celle intégrée au serveur 5 d'appel, pour traiter l'information relative à l'identification et la localisation d'un dispositif 7 de détection, de sorte à identifier les moyens d'alimentation du tableau 3 d'alimentation correspondant aux équipements 1 concernés.

Par exemple, si le tableau 3 est une armoire électrique comme représentée sur la figure, les moyens d'alimentation peuvent être par exemple des interrupteurs à bascule reliés à des prises électriques localisées dans des zones 2 géographiques et sur lesquelles sont branchés les équipements 1 desdites zones. De tels interrupteurs permettent de façon connue d'alimenter les prises électriques correspondantes ou de couper le courant dans lesdites prises.

En particulier, un administrateur 6 du réseau peut configurer le serveur 10 de présence de sorte que ledit serveur puisse identifier, pour chaque équipement 1 d'une zone 2 géographique donnée, un moyen d'alimentation correspondant dans le tableau 3 d'alimentation.

Une fois les moyens d'alimentation correspondants identifiés, le serveur 10 de présence envoie des instructions 12 au serveur 11 de contrôle d'énergie, ledit serveur de contrôle d'énergie envoyant alors des instructions 13 au tableau 3 pour commander à distance lesdits moyens d'alimentation identifiés.

En commandant à distance le tableau 3, le serveur 11 de contrôle d'énergie envoie par l'intermédiaire dudit tableau des instructions 14 de régulation aux équipements 1 concernés, lesdites instructions dépendant entre autres du contenu de l'information 8 de présence envoyée par le dispositif 7 de détection localisé.

Par exemple, si l'information 8 concerne l'arrivée ou le retour d'un utilisateur, les instructions 14 permettent d'établir ou de rétablir l'alimentation en énergie des équipements 1 concernés.

De même, si l'information 8 concerne le départ d'un utilisateur, les instructions 14 permettent d'interrompre l'alimentation en énergie des équipements 1 concernés.

En particulier, le serveur 11 de contrôle d'énergie peut être compris dans un réseau TCP/IP (pour Transmission Control Protocol/Internet Protocol) d'une entreprise. Parmi de tels serveurs de contrôle à distance disponibles dans le commerce, citons notamment le serveur Internet embarqué eTice Maître MODBUS® proposé par MICRELEC®.

Selon un mode de réalisation préféré, le procédé de régulation peut prévoir que le dispositif 7 de détection comprenne en outre au moins un capteur d'une information 15 induite par la consommation d'énergie des équipements 1. Par exemple, le dispositif 7 de détection peut comprendre une cellule photo électrique pour évaluer la luminosité de la zone 2 géographique dans laquelle ledit dispositif est localisé.

En particulier, le procédé de régulation peut prévoir, après commande du tableau 3 d'alimentation, de transmettre au serveur 5 d'appel l'information 15 issue du dispositif 7 de détection localisé afin de vérifier la bonne régulation des équipements 1 concernés. Pour ce faire, le dispositif 7 de détection peut comprendre en outre des moyens pour transmettre au serveur 5 d'appel l'information 15 induite.

Le serveur 5 d'appel peut comprendre des moyens pour vérifier, à partir d'une information 15 transmise par un dispositif 7 et de l'information 8 de présence initialement envoyée par ledit dispositif, que ladite information de présence a bien été prise en compte et que le procédé a correctement régulé la consommation d'énergie des équipements 1 concernés.

Par exemple, si l'information 15 transmise par un dispositif 7 localisé dans une zone 2 indique que l'alimentation en énergie des équipements 1 de ladite zone a été interrompue, et si l'information 8 initiale concernait le départ d'un utilisateur de ladite zone, le procédé a correctement régulé lesdits équipements.

En outre, dans ce mode de réalisation, le procédé de régulation peut prévoir, en cas de mauvaise régulation des équipements 1 concernés, que le serveur 5 d'appel active un mode de sécurité.

On parle de mauvaise régulation de la consommation d'énergie d'un équipement 1 lorsque, par exemple, l'information 15 transmise par un dispositif 7 localisé dans la même zone 2 que ledit équipement indique que ledit équipement est toujours alimenté en énergie, alors que l'information 8 de présence initiale concernait le départ d'un utilisateur de ladite zone.

En particulier, le mode de sécurité peut prévoir l'envoi d'une alerte 16 à un administrateur 6 d'un réseau comprenant le serveur 5 d'appel et la désactivation de la régulation de la consommation d'énergie des équipements 1 concernés.

Pour ce faire, le serveur 5 d'appel peut comprendre des moyens pour envoyer une alerte 16 à un administrateur 6 d'un réseau comprenant ledit serveur d'appel, ledit administrateur pouvant par exemple avoir à sa disposition des moyens pour désactiver automatiquement la régulation de la consommation d'énergie des équipements 1 concernés.

Selon une réalisation, la désactivation de la régulation peut consister en la désactivation du dispositif 7 de détection concerné et/ou en la désactivation des moyens d'alimentation du tableau 3 qui correspondent à des équipements 1 de la zone 2 dans laquelle est localisé ledit dispositif.

Pour désactiver un dispositif 7, l'administrateur 6 peut par exemple envoyer automatiquement une instruction 17 audit dispositif après la réception d'une alerte 16 concernant ledit dispositif, ledit administrateur étant alors le seul habilité à réactiver ledit dispositif.

De même, pour désactiver les moyens d'alimentation du tableau 3 qui correspondent aux équipements 1 concernés, l'administrateur 6 peut par exemple envoyer automatiquement une instruction 18 audit tableau après la réception d'une alerte 16, ledit administrateur étant alors le seul habilité à réactiver lesdits moyens d'alimentation.

La désactivation des moyens d'alimentation peut consister, par exemple pour des interrupteurs à bascule d'une armoire électrique, en leur blocage dans la position d'alimentation ou dans la position de coupure de courant, la régulation des équipements 1 concernés se faisant alors, dans le premier cas, de façon manuelle par les utilisateurs desdits équipements.

Selon un mode de réalisation, le procédé de régulation peut également prévoir, en cas de problème d'identification et/ou de localisation d'un dispositif 7 de détection suite à la réception par le serveur 5 d'appel d'une information 8 transmise par ledit dispositif, que ledit serveur active un mode de sécurité tel que décrit précédemment.

En particulier, le serveur 5 d'appel peut rencontrer des difficultés pour identifier et/ou localiser un dispositif 7 de détection lorsque, par exemple, le terminal 4 équipé dudit dispositif a été déconnecté dudit serveur, de façon volontaire ou non. En effet, un terminal 4 peut être déconnecté volontairement du serveur 5 d'appel, et plus généralement d'un réseau comprenant ledit serveur, pour être par exemple déplacé physiquement dans une autre zone 2. Un tel changement peut poser des problèmes d'identification et de localisation si l'administrateur 6 du réseau concerné n'a pas configuré lesdits changements dans la table du serveur 5 d'appel.

Pour ce faire, le procédé de régulation peut prévoir en outre que, après avoir identifié et localisé un dispositif 7 de détection, le serveur 5 d'appel vérifie l'historique d'utilisation du terminal 4 équipé dudit dispositif localisé, par exemple au moyen de l'adresse IP dudit terminal, et, lorsque ledit historique comprend une déconnexion dudit terminal, que le serveur 5 d'appel active un tel mode de sécurité.

## Revendications

1. Procédé de régulation de la consommation d'énergie d'équipements (1) en exploitant la notion de présence d'un serveur (5) d'appel, lesdits équipements étant alimentés par un tableau (3) et localisés dans des zones (2) géographiques comprenant au moins un terminal (4) connecté audit serveur d'appel, ledit procédé prévoyant d'équiper lesdits terminaux avec un dispositif (7) de détection qui comprend des moyens agencés pour transmettre audit serveur d'appel une information (8) de présence d'un utilisateur dudit terminal, ledit serveur intégrant une table d'identification et de localisation des dispositifs (7) de détection, ledit procédé prévoyant, après réception d'une information (8) de présence par le serveur (5) d'appel, de localiser le dispositif (7) de détection associé et d'utiliser ladite information de présence pour commander le tableau (3) d'alimentation afin de réguler la consommation d'énergie des équipements (1) de la zone (2) dans laquelle ledit dispositif de détection est localisé.

2. Procédé de régulation selon la revendication 1, **caractérisé en ce qu'**il prévoit en outre, avant de commander le tableau (3) d'alimentation, que le serveur (5) envoie au terminal (4) équipé du dispositif (7) de détection localisé une alerte (9) de régulation de la consommation d'énergie des équipements (1) concernés.

3. Procédé de régulation selon la revendication 1 ou 2, **caractérisé en ce que** le dispositif (7) de détection comprend en outre au moins un capteur d'une information (15) induite par la consommation d'énergie des équipements (1), ledit procédé prévoyant, après commande du tableau d'alimentation (3), de transmettre au serveur (5) d'appel l'information (15) issue du dispositif (7) de détection localisé afin de vérifier la bonne régulation des équipements (1) concernés.

4. Procédé de régulation selon la revendication 3, **caractérisé en ce qu'**il prévoit, en cas de mauvaise régulation des équipements (1) concernés, que le serveur (5) d'appel active un mode de sécurité.

5. Procédé de régulation selon l'une quelconque des revendications 1 à 4, **caractérisé en ce qu'**il prévoit, en cas de problème d'identification et/ou de localisation du dispositif (7) de détection, que le serveur (5) d'appel active un mode de sécurité.

6. Procédé de régulation selon la revendication 5, **caractérisé en ce qu'**il prévoit en outre que le serveur (5) d'appel vérifie l'historique d'utilisation du terminal (4) équipé du dispositif (7) de détection localisé et, lorsque ledit historique comprend une déconnexion dudit terminal, que le serveur (5) d'appel active un mode de sécurité.

7. Procédé de régulation selon l'une quelconque des revendications 4 à 6, **caractérisé en ce que** le mode de sécurité prévoit l'envoi d'une alerte (16) à un administrateur (6) d'un réseau comprenant le serveur (5) d'appel et la désactivation de la régulation de la consommation d'énergie des équipements (1) concernés.

8. Architecture pour la mise en oeuvre d'un procédé de régulation de la consommation d'énergie d'équipements (1) localisés dans des zones (2) géographiques, ladite architecture comprenant :
- un tableau (3) d'alimentation en énergie desdits équipements ;
- au moins un terminal (4) dans chacune desdites zones, chacun desdits terminaux étant équipé d'un dispositif (7) de détection qui comprend des moyens agencés pour transmettre une information (8) de présence d'un utilisateur dudit terminal ;
- un serveur (5) d'appel auquel sont connectés lesdits terminaux et qui comprend des moyens pour recevoir lesdites informations de présence, ledit serveur d'appel intégrant une table d'identification et de localisation des dispositifs (7) de détection ;
- un serveur (10) de présence comprenant des moyens pour commander un serveur (11) de contrôle d'énergie du tableau (3) d'alimentation afin de réguler la consommation d'énergie des équipements (1) de la zone (2) dans laquelle un dispositif (7) de détection a été localisé.

9. Architecture selon la revendication 8, **caractérisée en ce que** le serveur (10) de présence est intégré dans le serveur (5) d'appel.

10. Architecture selon la revendication 8 ou 9, **caractérisée en ce que** le dispositif (7) de détection comprend en outre au moins un capteur d'une information (15) induite par la consommation d'énergie des équipements (1), ainsi que des moyens pour transmettre au serveur (5) d'appel ladite information induite afin de vérifier la bonne régulation des équipements (1) concernés après commande du tableau (3) d'alimentation.
